# EUROPÄISCHE PATENTSCHRIFT

(11) **EP 1 423 224 B1**
(45) Veröffentlichungstag und Bekanntmachung des Hinweises auf die Patenterteilung: **01.12.2010**
(21) Anmeldenummer: 02776951.2
(22) Anmeldetag: 30.08.2002
(51) Int. Cl.: B23K 1/00

(54) **VERFAHREN UND VORRICHTUNG ZUM BELOTEN EINER METALLISCHEN STRUKTUR MITTELS VIBRATION**
METHOD AND DEVICE FOR APPLYING A SOLDER MATERIAL TO A METALLIC STRUCTURE BY MEANS OF VIBRATION
PROCEDE ET DISPOSITIF POUR BRASER UNE STRUCTURE METALLIQUE PAR VIBRATIONS

(30) Priorität: 07.09.2001 DE 10143916
(43) Veröffentlichungstag der Anmeldung: 02.06.2004
(73) Patentinhaber: Emitec Gesellschaft für Emissionstechnologie mbH, 53797 Lohmar (DE)
(72) Erfinder: CASPAR, Hans-Peter, 53844 Troisdorf (DE); KURTH, Ferdi, 53894 Mechernich (DE); SCHOLZ, Alex, 53127 Bonn (DE)
(74) Vertreter: Kahlhöfer, Hermann
(86) Internationale Anmeldenummer: PCT/EP2002/009674
(87) Internationale Veröffentlichungsnummer: WO 2003/022499

(56) Entgegenhaltungen:
- EP-A- 0 658 390
- WO-A-89/11938
- US-A- 3 656 224

## Beschreibung

Die vorliegende Erfindung betrifft ein Verfahren und eine Vorrichtung gemäß dem Oberbegriffen der Ansprüche 1, bzw. 14, zur Belotung einer metallischen Struktur mit einem pulverförmigen Lotmaterial. Solche metallischen Strukturen, die in WO 98/14299 beschrieben sind, sind beispielsweise Wabenkörper, die insbesondere als Katalysator-Trägerkörper, Speichermaterial-Trägerkörper oder Filterelemente zur Reinigung von Abgasen mobiler Verbrennungskraftmaschinen eingesetzt werden.

Metallische Wabenkörper werden zum Beispiel durch Stapeln und/oder Wickeln von Blechlagen hergestellt, von denen zumindest ein Teil strukturierte Blechlagen sind. Dabei sind unterschiedliche Ausgestaltungen bekannt, wie sie bspw. in der EP-A1-0245738 beschrieben sind. Die gestapelten und/oder gewickelten Blechlagen werden untereinander wenigstens teilweise verlötet, so dass ein monolithischer Wabenkörper entsteht. Es ist bekannt, dass der Wabenkörper wenigstens teilweise mit einem Mantelrohr, in dem er angeordnet ist, verlötet wird. Hierzu wird Lot in die Lötbereiche der Blechlagen und des Mantelrohres eingebracht. Bekannte Verfahren zum Aufbringen eines Haftmittels und Beloten einer solchen metallischen Anordnung enthaltend einen Wabenkörper und ein Mantelrohr gehen bspw. aus der WO 89/11938, der WO 94/06594, der WO 93/25339, der WO 99/37432 und der DE-A1-2924592 hervor.

Gemäß der WO 99/37432 wird vorgeschlagen, dass zunächst ein Wabenkörper durch Stapeln und/oder Wickeln von Blechlagen, von denen zumindest ein Teil strukturierte Blechlagen sind, so ausgebildet wird, dass dieser für ein Fluid durchströmbare Kanäle aufweist. Der Wabenkörper wird teilweise in ein Mantelrohr eingebracht. Der aus dem Mantelrohr hervorstehende Abschnitt des Wabenkörpers wird stirnseitig in Kontakt mit einer Hanflüssigkeit gebracht. Danach wird der Wabenkörper in das Mantelrohr eingeführt und anschließend mit einem Lotmaterial in Kontakt gebracht.

Derartige Wabenkörper werden üblicherweise sehr hohen thermischen und dynamischen Wechselbelastungen im Abgassystem einer Verbrennungskraftmaschine ausgesetzt. Die stark variierenden Temperaturen in der Abgasanlage haben ein unterschiedliches Ausdehnungsverhalten der die Wabenstruktur bildenden Blechlagen und des die Blechlagen umschließenden Mantelrohres zur Folge. Um die strukturelle Integrität des Wabenkörpers gefährdende thermische Spannungen zu vermeiden und andererseits eine dauerhafte Fixierung der Blechlagen im Mantelrohr zu gewährleisten, ist es bekannt, nur Teilbereiche der Blechlagen miteinander sowie der Blechlagen mit dem Mantelrohr zu verlöten. Dabei ist es besonders wichtig, die miteinander zu verlötenden Teilbereiche von den thermisch frei expansionsfähigen Teilbereichen des Wabenkörpers scharf abzugrenzen.

Aufgrund der Tatsache, dass die Kanalwände im Inneren des Wabenkörpers letztendlich noch mit einer katalytisch aktiven oder oberflächenvergrößernden Beschichtung versehen werden, und die technische Entwicklung derzeit hin zu sehr dünnen Blechfolien bei einer hohen Kanaldichte geht, ist es wünschenswert, dass der Kanalquerschnitt nicht infolge übermäßiger Anlagerung von Lotmaterial reduziert wird. Insbesondere sollen die Kanäle nur soviel Lötmaterial aufnehmen, dass einerseits die fügetechnische Verbindung der benachbarten und miteinander zu verlötenden Blechfolien dauerhaft sichergestellt ist, andererseits jedoch ausreichend große Bereiche der Kanalwände zur Verfügung gestellt werden, die frei von Lotmaterial und somit für die Anbringung einer weiteren Beschichtung geeignet sind.

Hiervon ausgehend ist es Aufgabe der vorliegenden Erfindung, ein Verfahren zur Belotung einer metallischen Struktur anzugeben, insbesondere eines Wabenkörpers mit Kanalwänden und Kanälen, wobei scharf abgegrenzte Lotbereiche erzielt, die benötigte Lotmaterial-Menge reduziert und eine dauerhafte Anbindung der Kanalwände auch unter hoher thermischer und dynamischer Belastung des Wabenkörpers sichergestellt werden kann. Weiterhin soll das Verfahren besonders einfach durchführbar und für eine Großserienfertigung von solchen metallischen Strukturen geeignet sein. Zusätzlich soll noch eine besonders einfach aufgebaute und variabel handhabbare Vorrichtung zur Belotung angegeben werden, die eine gleichmäßige Verteilung des Lotmaterials im Inneren der metallischen Struktur sicherstellt

Diese Aufgaben werden gelöst durch ein Verfahren mit den Merkmalen des Anspruchs 1 und eine Vorrichtung mit den Merkmalen des Anspruchs 14. Weitere vorteilhafte Ausgestaltungen des Verfahrens und der Vorrichtung sind in den jeweils abhängigen Ansprüchen beschrieben, wobei die jeweiligen vorteilhaften Ausgestaltungen auch miteinander kombiniert werden können.

Bei dem erfindungsgemäßen Verfahren zum Beloten einer metallischen Struktur nach Art eines Wabenkörpers, wird die metallische Struktur mit einem pulverförmigen Lotmaterial so in Kontakt gebracht, dass das Lotmaterial zumindest teilweise haften bleibt. Das Verfahren zeichnet sich dadurch aus, dass die metallischen Struktur und/oder das Lotmaterial zumindest während des in Kontakt Bringens in Vibration versetzt wird/werden und die Vibration mit einer Frequenz in einem Bereich zwischen 20 Hz und 100 Hz erfolgt. Dies kann beispielsweise dadurch erfolgen, dass die metallische Struktur zumindest während des Kontaktes von einem Greifer und/oder einem Manipulatorarm gehalten wird, wobei die Vibration über den Greifer bzw. den Manipulatorarm übertragen wird. Alternativ dazu ist auch möglich, sich das Lotmaterial in einem Behälter befindet, und die Vibration über den Behälter übertragen wird. Auch eine externe Stimulierung des Lotmaterials oder des Lotmaterials mittels eines Impulsgebers ist unter Umständen einsetzbar. Mit metallischer Struktur sind insbesondere für ein Fluid durchströmbare Strukturen mit Kanälen und/oder Öffnungen gemeint, die mehrere Einzelzeile (Gehäuse, Bleche, Folien, Gewebe, Netze, Fasern, Drähte, etc.) aufweisen, die mittels einem Lötvorgang miteinander fügetechnisch verbunden werden. Die Einzelzeile begrenzen bzw. definieren dabei die Kanäle bzw. Öffnungen, welche die Durchströmbarkeit der Struktur gewährleisten.

Die Vibration der metallischen Struktur bzw. des Lotmaterials hat zur Folge, dass sich das Lotmaterial bevorzugt in den Kontaktbereichen der benachbarten und zu verbindenden Wänden anlagert, in diese hineingedrückt und fixiert wird. Diese Kontaktbereiche stellen zumeist Zwickel, Kanten, Spalten oder dergleichen dar, wobei das Lotmaterial bei einer dortigen Anlagerung bevorzugt mit zwei benachbarten Kanalwänden gleichzeitig in Kontakt ist. Das Lotmaterial ist so dauerhaft fixiert, wobei sichergestellt ist, dass das Lotmaterial bei einer anschließenden Ausbildung der fügetechnischen Verbindung während einer Hochtemperatur-Behandlung der metallischen Struktur exakt an den miteinander zu verbindenden Wänden angeordnet ist.

Ist die metallische Struktur ein metallischer Wabenkörper mit Kanalwänden und Kanälen, so grenzen die Kanäle an mindestens eine Stirnfläche des Wabenkörpers und verlaufen zumindest nahe dieser Stirnfläche parallel zu einer Achse. Das Belotungsverfahren dient primär dazu, dass der Wabenkörper so mit einem, insbesondere pulverförmigen, Lotmaterial in Kontakt gebracht wird, dass das Lotmaterial zumindest teilweise an den Kanalwänden in den Kanälen haften bleibt. Dabei wird vorgeschlagen, dass der Wabenkörper und/oder das Lotmaterial zumindest während des miteinander in Kontakt Bringens vibriert. Vibrieren umfasst beispielsweise Schwingen, Rotieren, translatorische Relativbewegungen oder dergleichen, wobei das Lotmaterial relativ zur metallischen Struktur kurzzeitig eine Beschleunigung bzw. Geschwindigkeit in Richtung der Kanalwände erfährt.

Weiterhin hat die Vibration den Vorteil, dass das nicht wie oben geschildert eingeklemmte Lotmaterial, welches insbesondere nur Kontakt zu einer Kanalwand hat, infolge des impulsartigen Auftreffens der noch frei in den Kanälen beweglichen Lotpartikel wieder herausgeschlagen bzw. abgelöst wird. Die Partikel des Lotmaterials haben dabei vorzugsweise eine durchschnittliche Partikelgröße von 20 µm bis 120 µm, insbesondere zwischen 25 µm und 100 µm. Auf diese Weise wird verhindert, dass der Kanalquerschnitt infolge von Lotmaterialanhäufungen reduziert wird, die an einer zur fügetechnischen Verbindung benachbarter Kanalwände ungeeigneten Position angeordnet sind. Dies wirkt sich insbesondere positiv im Hinblick auf den Druckverlust eines solchen Wabenkörpers beim Durchströmen eines Fluides aus.

Gemäß einer weiteren Ausgestaltung des Verfahren vibrieren der Wabenkörper und das Lotmaterial zueinander rotatorisch, wobei vorzugsweise die gesamte Stirnfläche des Wabenkörpers eine Relativbewegung zum Lotmaterial durchführt. Darunter ist zu verstehen, dass neben einer reinen Rotation oder Drehschwingung des Wabenkörpers bzw. eines in einem Behälter angeordneten Lotmaterials weitere Relativbewegungen überlagert sein können. Dabei werden insbesondere Bewegungsbahnen generiert, die bevorzugt geschlossen sind und in jedem Teilbereich der Stirnfläche des Wabenkörpers eine Relativbewegung von Kanalwänden und Lotmaterial zur Folge haben. Dieser Sachverhalt sollte insbesondere auch für Teilbereiche des Wabenkörpers gelten, die nahe der Rotationsachse des Wabenkörpers oder des Behälters angeordnet sind. Die Ausgestaltungen der Vibration in Form einer rotatorischen Schwingung hat den Vorteil, dass eine Anlage zur Durchführung der derartigen Rotationsschwingung besonders kompakt gebaut werden kann und somit das Verfahren besonders im Hinblick auf die Großserienfertigung bzw. Massenfertigung von Wabenkörpern geeignet ist.

Gemäß noch einer weiteren Ausgestaltung erfolgt die Vibration mit einer gleichbleibenden Amplitude. Unter Amplitude wird in diesem Zusammenhang bspw. die maximale Bewegung einer Kanalwand in Vibrationsrichtung infolge der Vibration verstanden. Mit dem Vibrationsvorgang wird insbesondere schon vor dem in Kontakt Bringen begonnen, wobei vorzugsweise noch zuvor eine gegebenenfalls vorhandene Durchwirbelung des Lotmaterials (z.B. mittels Luft) abgeschaltet wird. Der Vibrationsvorgang, der bevorzugt durch eine Vibration der metallischen Struktur erzeugt wird, wird vorzugsweise erst nach dem Entfernen der metallischen Struktur aus dem Lotmaterial beendet. Somit dauert der Vibrationsvorgang vorzugsweise nur weniger als 5 Sekunden, insbesondere weniger als 3 oder 2 Sekunden und unter Umständen sogar weniger als 1 Sekunde. Die Amplitude liegt hierbei in einem Bereich zwischen 0,1 mm und 3 mm, vorzugsweise zwischen 0,2 mm und 1,0 mm.

Weiterhin wird vorgeschlagen, während der Vibration eine Änderung der Frequenz vorzunehmen. Aufgrund der Tatsache, dass, insbesondere bei pulverförmigem Lotmaterial, Lotpartikel unterschiedlicher Größe anzutreffen sind, wird mit einer Variation der Frequenz eine besonders gute Anlagerung der Lotpartikel in den Kontaktbereichen der benachbarten Kanalwände erreicht. Die Frequenz liegt hierbei bevorzugt zwischen 20 Hz und 100 Hz, insbesondere zwischen 25 Hz und 50 Hz.

Gemäß einer weiteren Ausgestaltung führt das Lotmaterial und/oder die metallische Struktur zusätzlich während der Vibration eine Eintauchbewegung in axialer Richtung durch. Dies führt zu einem besonders intensiven Kontakt des Lotmaterials und der Kontaktbereiche benachbarter Kanalwände.

Besonders bevorzugt werden die Bereiche der metallischen Struktur, an denen das Lotmaterial haften bleiben soll, zur Sicherstellung einer dauerhaften Fixierung des Lotmaterials in den gewünschten Bereichen vor dem Belotungsvorgang zumindest teilweise mit einem Haftmittel versehen. Das Haftmittel ist dabei günstigerweise an allen Kanalwänden des Lötbereichs der metallischen Struktur angeordnet

Gemäß noch einer weiteren Ausgestaltung erfolgt eine Belotung nur bis zu einer vorgebbaren Höhe ausgehend von einer Stirnfläche metallischen Struktur. Auf diese Weise wird ein stirnseitiger Lötbereich definiert, wobei weiter im Inneren liegende Teilbereiche der metallischen Struktur letztendlich nicht miteinander fügetechnisch verbunden werden, und folglich dort ein unterschiedliches thermisches Ausdehnungsverhalten ermöglicht wird.

Für den Fall, dass eine stirnseitige Belotung auf beiden Seiten der metallischen Struktur gewünscht ist, wird die metallische Struktur nach dem miteinander in Kontakt Bringen in Relation zu dem Lotmaterial bewegt, und der Belotungsvorgang von der anderen Stirnfläche der metallischen Struktur wiederholt. In diesem Fall ergeben sich Lötbereiche nahe den Stirnflächen, wobei ein Teilbereich im Inneren der metallischen Struktur, zum Beispiel infolge thermischer Wechselbeanspruchungen, frei expandieren bzw. kontrahieren kann.

Weiterhin wird vorgeschlagen, dass die metallische Struktur nach dem miteinander in Kontakt bringen noch über einen vorgebbaren Zeitraum weiter vibriert. Dabei ist auch möglich, abschließend eine zumindest teilweise Reinigung der Kanalwände durchzuführen, insbesondere mittels eines die Kanäle durchströmenden Fluids. Das nachträgliche Vibrieren sowie das Durchströmen mit einem Fluid stellt sicher, dass nur Lotmaterial in den Kontaktbereichen benachbarter Kanalwände bzw. in den Kontaktbereichen der Kanalwände mit einem sie umgebenden Mantelrohr angeordnet ist.

Weist die bspw. als Wabenkörper ausgeführte metallische Struktur zumindest teilweise strukturierte Blechfolien auf, so dass Kanäle mit Zwickeln und Flanken gebildet sind, erfolgt eine solche Vibration, dass das Lotmaterial im wesentlichen nur in den Zwickeln abgelagert wird. Die Zwickel stellen dabei die Kontaktbereiche der zueinander benachbarten zumindest teilweise strukturierte Blechfolien dar. Dabei ist die Art der Vibration sowie deren Amplitude und/oder Frequenz auf das verwendete Lotmaterial (Partikelgröße, Zusatzstoffe, etc.) abzustimmen. Die Flanken, die insbesondere zur Anlagerung von einer katalytisch aktiven oder oberflächenvergrößernden Beschichtung dienen, bleiben somit frei von Lotmaterial.

Gemäß einem weiteren Aspekt der Erfindung wird eine Vorrichtung zur Belotung einer metallischen Struktur mit einem pulverförmigen Lotmaterial vorgeschlagen. Die Vorrichtung umfasst einen Behälter zur Aufnahme des pulverförmigen Lotmaterials und einen Manipulatorarm zur Fixierung der metallischen Struktur, wobei Mittel zur Erzeugung einer Vibration der metallischen Struktur und/oder des pulverförmigen Lotmaterials vorgesehen sind. Die Vorrichtung eignet sich demnach insbesondere zur Durchführung der oben beschriebenen Verfahren. Die Vorrichtung ist sehr einfach aufgebaut und gewährleistet durch die Möglichkeit der Vibration auch im Rahmen einer Großserienfertigung eine sehr gute Haftung der Lotkörner in den entsprechenden Bereichen der metallischen Struktur, die anschließend während der Lötvorgangs miteinander verbunden werden sollen.

Die Mittel zur Erzeugung einer Vibration können sehr unterschiedlich angeordnet und ausgeführt werden. Die nachfolgenden Ausführungsformen stellen lediglich beispielhaft einige allgemeine und prinzipielle Alternativen dar und sollen hier nicht als die Erfindung beschränkend aufgefasst werden. Die Anregung der verschiedenen Bauteile der Vorrichtung kann dabei beispielsweise direkt oder über Überträger-Bauteile erfolgen. So wird unter anderem vorgeschlagen, einen Vibrator mit dem Behälter zu verbinden. Alternativ oder in Kombination dazu kann ein Vibrator auch mit der metallischen Struktur direkt oder indirekt verbunden sein. Dabei ist der Vibrator insbesondere Teil des Manipulatorarmes oder eines dazugehörigen Greifers selbst. Soll eine Bewegung des Lotbehälters und/oder Manipulatorarmes vermieden werden, wodurch geringere Kräfte und Energien zur Erzeugung einer gezielten Vibration benötigt werden, kann ein Impulsgeber vorgesehen sein, der zumindest eine Vibration des pulverförmigen Lotmaterials bewirkt. Derartige Impulsgeber können beispielsweise unterschiedliche und einstellbare Druckwellen und/oder Impulse aussenden, die eine gezielte Vibration gewährleisten.

Die Erfindung wird nachfolgend anhand der Figuren näher erläutert. Dabei stellen die Figuren Vorrichtungen sowie Anordnungen bzw. Verfahrensschritte dar, die zwar besonders bevorzugt sind, welche die Erfindung jedoch nicht beschränken sollen. Es zeigen:
- Fig. 1:: Schematisch und perspektivisch eine Anordnung von Lotmaterial und Wabenkörper während der Durchführung des Belotungsverfahrens,
- Fig. 2:: eine schematische Darstellung des Belotungsverfahrens mit vibrierendem Wabenkörper,
- Fig. 3:: eine weitere Ausgestaltung des Belotungsverfahrens mit vibrierendem Lotmaterial,
- Fig. 4:: eine Detailansicht eines Wabenkörpers,
- Fig. 5:: eine Detailansicht eines mit Lotmaterial versehenen Kanals des Wabenkörpers, und
- Fig. 6:: eine schematische Darstellung einer Ausführungsform der erfindungsgemäßen Vorrichtung.

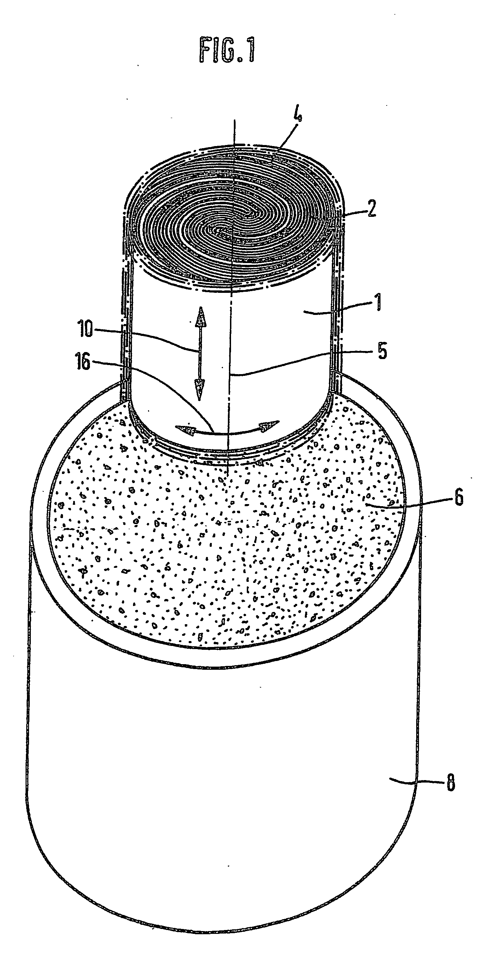

Fig. 1 zeigt schematisch und perspektivisch einen Behälter 8 mit pulverförmigen Lotmaterial 6. Zum Beloten des Wabenkörpers 1 wird dieser in Eintauchrichtung 10 so relativ zum Lotmaterial 6 bewegt, dass das Lotmaterial 6 mit den Kanalwänden 2 des Wabenkörpers 1 in Kontakt gebracht wird. Die Einbringung des Lotmaterials 6 in die Kanäle 3 (nicht dargestellt) des Wabenkörpers 1 erfolgt dabei über eine der beiden Stirnflächen 4. Während des in Kontakt Bringens vibriert der Wabenkörper 1 in einer Vibrationsrichtung 16, welche hier als Rotation um die Achse 5 dargestellt ist.

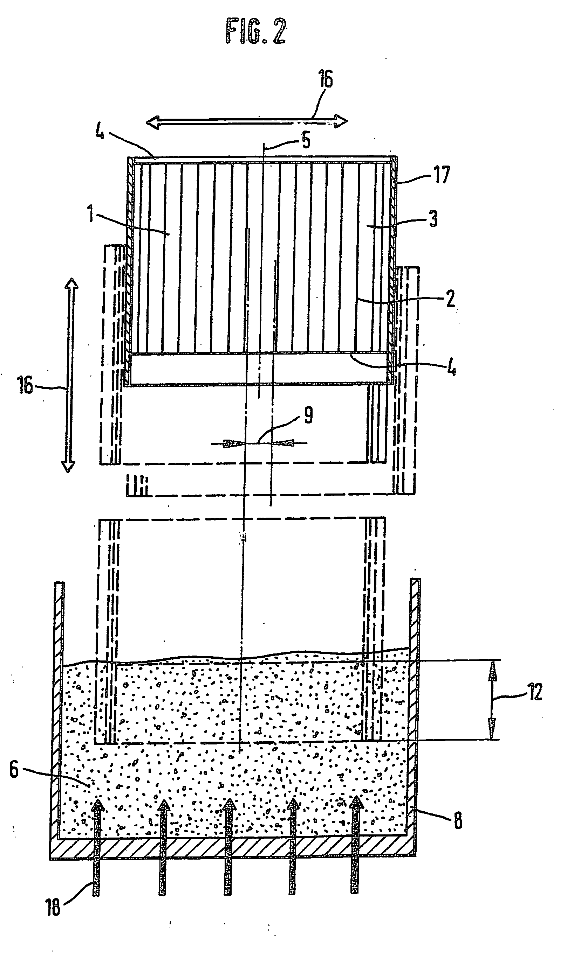

Fig. 2 zeigt eine schematische Darstellung des Belotungsvorganges mit vibrierendem Wabenkörper 1. Der Wabenkörper 1 umfasst Kanalwände 2, welche Kanäle 3 bilden, die im wesentlichen parallel zur Achse 5 des Wabenkörpers angeordnet sind. Der Wabenkörper 1 umfasst weiterhin ein Mantelrohr 17, welches in der dargestellten Ausführungsform des Wabenkörpers 1 über beide Stirnflächen 4 hervorsteht. Während des Eintauchens des Wabenkörpers 1 in ein mit einem pulverförmigen Lotmaterial 6 gefüllten Behälter 8 vibriert der Wabenkörper horizontal und/oder vertikal (angedeutet durch die Pfeile 16) mit einer vorgebbaren Amplitude 9 und einer insbesondere in Abhängigkeit des verwendeten Lotmaterials 6 gewählten Frequenz. Der Belotungsvorgang wird dabei so durchgeführt, dass eine Belotung der Kanalwände 2 des Wabenkörpers 1 bis zu einer Höhe 12 sichergestellt ist. Zur Unterstützung des Belotungsvorganges kann zusätzlich ein Luftstrom 18 in das Lotpulver eingeleitet werden, der das Eindringen des Lotmaterials 6 in das Innere der Kanäle 3 unterstützt.

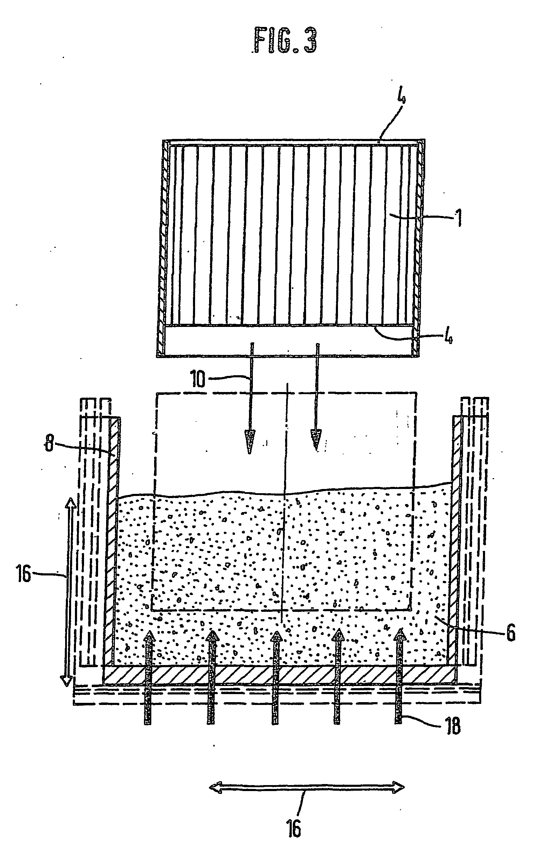

Fig. 3 zeigt schematisch den Belotungsvorgang, wobei hier der Behälter 8 mit dem darin befindlichen Lotmaterial 6 zum Vibrieren angeregt wird. Die Vibrationsrichtung 16 ist durch Pfeile angedeutet. Der Wabenkörper 1 wird über eine Stirnfläche 4 in Eintauchrichtung 10 bewegt, bis das Lotmaterial 6 mit den Kanalwänden im Inneren des Wabenkörpers 1 in Kontakt kommt. Sobald die Stirnfläche 4 mit dem Lotmaterial 6 in Kontakt steht, beginnt die Vibration des Behälters 8 bzw. des Lotmaterials 6. Auch in diesem Fall kann das Eindringen des pulverförmigen Lotmaterials 6 in die Kanäle 3 durch einen Luftstrom 18 unterstützt werden.

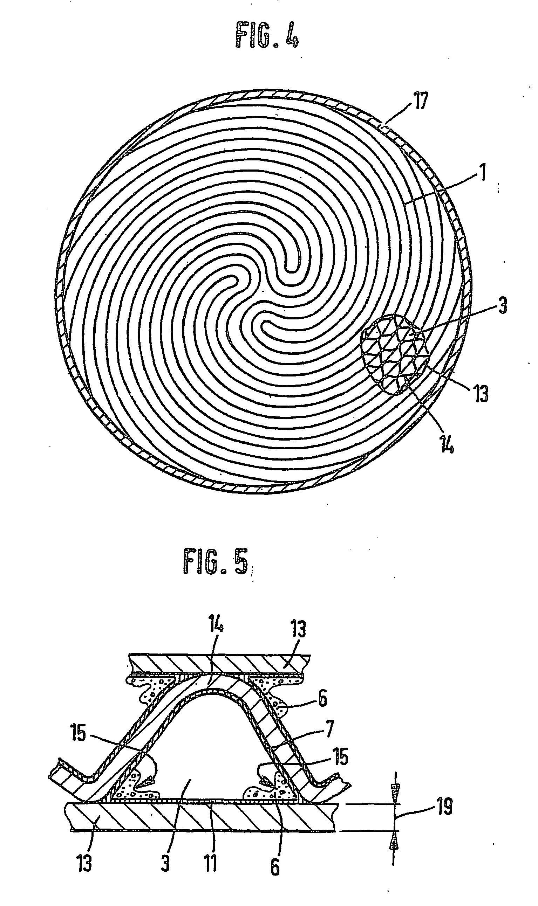

Fig. 4 zeigt die Ansicht einer Stirnfläche 4 eines Wabenkörpers 1. Der Wabenkörper 1 umfasst eine Vielzahl von Blechlagen, die zumindest teilweise strukturiert sind. Die Blechlagen werden miteinander gewickelt und/oder gestapelt und in einem Mantelrohr 17 angeordnet. Zur Ausbildung einer fügetechnischen Verbindung werden vorgebbare Teilbereiche des Wabenkörpers bzw. des Mantelrohres 17 mit Lotmaterial 6 versehen, wobei bei einer nachträglichen Kochtemperatur- Wärmebehandlung sich das Lotmaterial 6 verflüssigt und eine entsprechende Verbindung der Blechlagen mit dem Mantelrohr 17 bzw. der Blechlagen untereinander sicherstellt. Die Wärmebehandlung findet dabei vorzugsweise unter einer reduzierten Atmosphäre, insbesondere Vakuum, statt. In der dargestellten Ausführungsform werden die Kanäle 3 des Wabenkörpers 1 durch Glattlagen 13 und Welllagen 14 gebildet, welche anschließend zu einem monolithischen Wabenkörper 1 miteinander verdreht bzw. gewickelt werden. Dabei einsteht eine Kanaldichte des Wabenkörpers 1, die bevorzugt oberhalb von 600 cpsi ("cells per sqare inch") liegt, insbesondere sogar oberhalb von 1000 cpsi.

Fig. 5 zeigt schematisch eine Detailansicht eines Kanals 3 des Wabenkörpers 1. Der Kanal 3 wird zumindest teilweise von einer Glattlage 13 und einer Welllage 14 begrenzt. Infolge des Aufeinanderstapelns von abwechselnd gewellten Welllagen 14 und im Wesentlichen ebenen Glattlagen 13 (vor dem Verwinden der Blechlagen) werden Zwickel 15 und Flanken 7 gebildet. Die Zwickel 15 werden dabei durch die benachbart angeordneten glatten und gewellten Blechlagen 13, 14 gebildet, wobei diese Kontaktbereiche vorrangig zur Ausbildung von Fügestellen herangezogen werden.

Die Vibration während des Belotungsverfahrens hat nun zur Folge, dass sich Lotmaterial 6 bevorzugt und nahezu ausschließlich in den Zwickeln 15 der Kanäle 3 anordnet. Die Flanken 7 des Kanals 3 bleiben im wesentlichen frei von Lotmaterial 6. Obwohl der gesamte Kanal 3 mit einem Haftmittel 11 versehen ist, werden Lotmaterialauhäufungen, die sich an den Flanken 7 angeordnet haben, infolge des Vibrationsvorganges wieder aus den Kanälen 3 herausgeschlagen, da diese nur eine relativ geringe Anlage- bzw. Haftfläche aufweisen. Auf diese Weise wird nur sehr wenig Lotmaterial 6 zur Ausbildung von fügetechnischen Verbindungen des Wabenkörpers 1 benötigt. Dies ist auch im Hinblick auf die Materialeigenschaften der Blechlagen besonders vorteilhaft, da eine übermäßige Anlagerung von Lotmaterial u.U. zu einer Korrosionsanfalligkeit der Blechlagen 13, 14 führen kann. Insbesondere wenn die Welllagen 14 und/oder Glattlagen 13 eine Dicke 19 aufweisen, die kleiner 0,03 mm ist, insbesondere kleiner 0,025 mm.

Dieser Dickenbereich stellt dabei den üblichen Rahmen für Wabenkörper 1 dar, die in Abgasanlagen von Automobilen eingesetzt werden. Die oberflächenspezifische Wärmekapazität des Wabenkörpers 1 wird somit relativ niedrig gehalten, wobei ein besseres Kaltstartverhalten, das heißt ein rasches Erwärmen bis zu einen bestimmten Aktivierungstemperatur, zu beobachten ist. Dient der Wabenkörper bspw. als Trägerkörper für eine katalytisch aktive Beschichtung, so muss diese schnell eine Temperatur von ca. 230°C erreichen, bevor sie mit der katalytischen Umsetzung von im Abgas enthaltenen Schadstoffen (z.B. Kohlenwasserstoffe, Kohlenmonoxide, Stickoxide) beginnt. Weist der Wabenkörper eine Speicherfähige Beschichtung auf, insbesondere zum Adsorbieren von Stickoxiden, so sind gegebenenfalls auch Dicken der Blechfolien oberhalb von 0,03 mm bis etwa 0,1 mm zu verwenden, da hier die Beschichtung mit höherer Temperatur ihre Speicher- bzw. Adsorptionseigenschaft verliert. Folglich ist für diese Anwendung ein verlangsamtes Erhitzen des Wabenkörpers 1 durch das hmdurchströmende heiße Abgas vorteilhaft. Bei der Verwendung derartiger Wabenkörper als offener oder geschlossener Filter werden Blechdicken in einem Bereich zwischen 0,08 und 0,02 mm bevorzugt.

Während eines dem Belotungsverfahren nachgeschalteten Hochtemperatur-Vakuum-Prozesses verflüssigt sich das in den Zwickeln 15 angelagerte Lotmaterial 6 und dringt bevorzugt zwischen die zueinander benachbarten Blechlagen 13, 14. Das noch an den Kanalwänden 3 befindliche Haftmittel 11 wird während dieses Hochtemperatur-Prozesses verdampft. Die freien Flanken 7 der Kanäle 3 dienen nun zur Aufnahme von katalytisch aktiven oder oberflächenvergrößernden Beschichtungen, wie bspw. Washcoat

Das vorgeschlagene Belotungsverfahren gewährleistet auf sehr einfache Weise, dass das benötigte Lotmaterial reduziert werden kann, wobei dennoch eine dauerhafte Anbindung benachbarter Kanalwände des Wabenkörpers gewährleistet ist. Das Vibrieren hat zur Folge, dass sich lediglich in den Kontaktbereichen der benachbarten Kanalwände Lotmaterial anlagert und die Kanalwände selbst im wesentlichen frei von Lotmaterial sind.

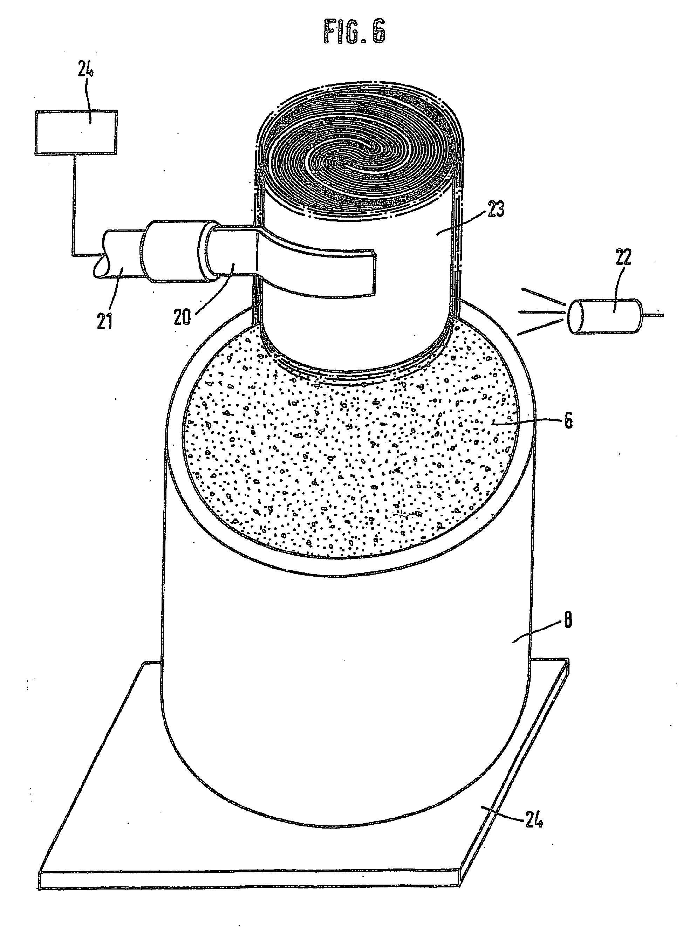

Fig. 6 zeigt eine schematische Darstellung einer Ausführungsform der erfindungsgemäßen Vorrichtung. Die dargestellte Vorrichtung ist zur Durchführung eines Verfahrens zum Beloten einer metallischen Struktur 23 geeignet, wobei die metallische Struktur 23 mit einem pulverförmigen Lotmaterial 6 so in Kontakt gebracht wird, dass das Lotmaterial 6 zumindest teilweise haften bleibt, und die metallischen Struktur 23 und/oder das Lotmaterial 6 zumindest während des Kontaktes in Vibration versetzt wird/werden. Hierzu wird die metallische Struktur 23 zumindest während des Kontaktes von einem einen Greifer 20 aufweisenden Manipulatorarm 21 gehalten, wobei dieser mit einem Vibrator 24 verbunden ist, so dass die Vibration über den Greifer 20 bzw. den Manipulatorarm 21 auf die metallische Struktur 23 übertragen wird. Zusätzlich kann eine Vibration über einen mit dem Behälter 8 verbundenen Vibrator 24 übertragen werden. Weiterhin weist die dargestellte Vorrichtung einen ein Impulsgeber 22 auf, der eine Vibration des pulverförmigen Lotmaterials 6 bewirkt. Dieser Impulsgeber 22 ist in der Lage einen bzw. mehrere gerichtete Impulse auf Teilbereiche der metallischen Struktur 23 auszusenden, ohne mit dieser direkt verbunden zu sein bzw. diesen zu berühren. Als solche Vibratoren 24 bzw. Impulsgeber 22 bieten sich beispielsweise Piezokristalle, Körperschall-Erzeuger, Schalldruck-Erzeuger, mechanische Schwingungserreger oder dergleichen an.

### Bezugszeichenliste

- 1: Wabenkörper
- 2: Kanalwand
- 3: Kanal
- 4: Stirnfläche
- 5: Achse
- 6: Lotmaterial
- 7: Flanke
- 8: Behälter
- 9: Amplitude
- 10: Eintauchrichtung
- 11: Haftmittel
- 12: Höhe
- 13: Glattlage
- 14: Wellige
- 15: Zwickel
- 16: Vibrationsnchtung
- 17: Mantelrohr 18 Luftstrom
- 19: Dicke
- 20: Greifer
- 21: Manipulatorarm
- 22: Impulsgeber
- 23: Metallische Struktur
- 24: Vibrator

## Patentansprüche

1. Verfahren zum Beloten einer metallischen Struktur (23) nach Art eines Wabenkörpers (1), wobei die metallische Struktur (23) mit einem pulverförmigen Lotmaterial (6) so in Kontakt gebracht wird, dass das Lotmaterial (6) zumindest teilweise haften bleibt, **dadurch gekennzeichnet, dass** die metallischen Struktur (23) und/oder das Lotmaterial (6) zumindest während des in Kontakt Bringens in Vibration versetzt wird/werden und die Vibration mit einer Frequenz in einem Bereich zwischen 20 Hz und 100 Hz, insbesondere zwischen 25 Hz und 50 Hz, erfolg, und wobei die Vibration mit einer Amplitude in einem Bereich zwischen 0,1 mm und 3 mm erzeugbar ist.

2. Verfahren nach Anspruch 1, bei dem die metallische Struktur (23) zumindest während des Kontaktes von einem Greifer (20) und/oder Manipulatorarm (21) gehalten wird, wobei die Vibration über den Greifer (20) bzw. den Manipulatorarm (21) übertragen wird.

3. Verfahren nach Anspruch 1, bei dem sich das Lotmaterial in einem Behälter (8) befindet, wobei die Vibration über den Behälter (8) übertragen wird.

4. Verfahren nach einem der vorhergehenden Ansprüche, bei dem die metallische Struktur (23) ein Wabenkörpers (1) mit Kanalwänden (2) und Kanälen (3) ist, wobei die Kanäle (3) an eine Stirnfläche (4) des Wabenkörpers (1) grenzen und parallel zu einer Achse (5) verlaufen, und bei dem weiter der Wabenkörper (1) und das Lotmaterial (6) zueinander rotatorisch vibriert werden, wobei vorzugsweise die gesamte Stirnfläche (4) des Wabenkörpers (1) eine Relativbewegung zum Lotmaterial (6) durchführt.

5. Verfahren nach einem der vorhergehenden Ansprüche, bei dem die Vibration mit einer gleichbleibenden Amplitude (9) durchgeführt wird.

6. Verfahren nach einem der vorherigen Ansprüche, bei dem während der Vibration eine Änderung der Frequenz der Vibration erfolgt.

7. Verfahren nach einem der vorherigen Ansprüche, bei dem das Lotmaterial (6) und/oder die metallische Struktur (23) zusätzlich eine Eintauchbewegung in axialer Richtung (5) durchführt.

8. Verfahren nach einem der vorherigen Ansprüche, bei dem zumindest auf die Bereiche der metallischen Struktur (23), an denen Lotmaterial (6) haften bleiben soll, vor dem Beloten mit einem Haftmittel (11) versehen werden.

9. Verfahren nach einem der vorherigen Ansprüche, bei dem eine Belotung nur bis zu einer vorgebbaren Höhe (12) ausgehend von einer Stirnfläche (4) der metallischen Struktur (23) erfolgt.

10. Verfahren nach einem der vorherigen Ansprüche, bei dem die metallische Struktur (23) nach dem miteinander in Kontakt Bringens in Relation zu dem Lotmaterial (6) bewegt wird, und der Belotungsvorgang von einer anderen Stirnfläche (4) der metallischen Struktur (23) wiederholt wird.

11. Verfahren nach einem der vorherigen Ansprüche, bei dem auch nach dem miteinander in Kontakt Bringens die metallische Struktur (23) noch über einen vorgebbaren Zeitraum vibriert.

12. Verfahren nach einem der vorherigen Ansprüche, bei dem abschließend eine zumindest teilweise Reinigung der metallischen Struktur (23) erfolgt, wobei überflüssiges Lotmaterial (6) aus der metallischen Struktur (23) entfernt wird, insbesondere mittels eines die metallische Struktur (23) durchströmenden Fluids.

13. Verfahren nach einem der vorherigen Ansprüche, wobei die metallische Struktur (23) als Wabenkörper (1) aufgebaut ist, insbesondere mit zumindest teilweise strukturierte Blechfolien (13, 14), wobei die Kanäle (3) Zwickel (15) bilden, und das Lotmaterial (6) infolge des Vibrierens im wesentlichen in den Zwickeln (15) angelagert wird.

14. Vorrichtung zur Belotung einer metallischen Struktur (23) nach Art eines Wabenkörpers mit einem pulverförmigen Lotmaterial (6), umfassend einen Behälter (8) zur Ausnahme des pulverförmigen Lotmaterials (6) und einen Manipulatorarm (21) zur Fixierung der metallischen Struktur (23), **dadurch gekennzeichnet, dass** Mittel (22, 24) zur Erzeugung einer Vibration der metallischen Struktur (23) und/oder des pulverförmigen Lotmaterials (6) vorgesehen sind, wobei Vibrationen mit einer Frequenz in einem Bereich zwischen 20 Hz und 100 Hz, insbesondere zwischen 25 Hz und 50 Hz. erzeugbar sind, und wobei Vibrationen mit einer Amplitude in einem Bereich zwischen 0,1 mm und 3 mm erzeugbar sind.

15. Vorrichtung nach Anspruch 14, **dadurch gekennzeichnet, dass** ein Vibrator (24) mit dem Behälter (8) verbunden ist.

16. Vorrichtung nach Anspruch 14 oder 15, **dadurch gekennzeichnet, dass** ein Vibrator (24) mit der metallischen Struktur (23) verbunden ist, insbesondere ist der Vibrator (24) Teil des Manipulatorarmes (21).

17. Vorrichtung nach einem der Ansprüche 14 bis 16, **dadurch gekennzeichnet, dass** ein Impulsgeber (22) vorgesehen ist, der eine Vibration des pulverförmigen Lotmaterials (6) bewirkt.

## Claims

1. A process for applying brazing material to a metallic structure (23) like a honeycomb body (1), wherein the metallic structure (23) is brought into contact with a powdery brazing material (6), such that the brazing material (6) at least partially comes to adhere to the metallic structure (23), **characterized in that** vibration is induced into the metallic structure (23) and/or the brazing material (6) at least while being brought into contact and the vibration is executed with a frequency in a region of between 20 Hz and 100 Hz, in particular between 25 Hz and 50 Hz, and wherein the vibration is carried out with an amplitude in a region of between 0,1 mm and 3 mm.

2. The process according to claim 1, in which the metallic structure (23) at least during contact is held by a gripper (20) and/or a manipulator arm (21), wherein the vibration is transmitted via the gripper (20) and the manipulator arm (21), respectively.

3. The process according to claim 1, in which the brazing material is provided in a container (8), wherein the vibration is transmitted via the container (8).

4. The process according to one of the preceding claims, in which the metallic structure (23) is a honeycomb body (1) having channel walls (2) und channels (3), wherein the channels (3) adjoin an end face (4) of the honeycomb body (1) and extend parallel to an axis (5), and in which further the honeycomb body (1) and the brazing material (6) are vibrated rotationally to one another, wherein preferably the entire end face (4) of the honeycomb body (1) executes a movement relative to the brazing material (6).

5. The process according to one of the preceding claims, in which the vibration is executed with constant amplitude (9).

6. The process according to one of the preceding claims, in which during vibration a change of frequency of vibration is executed.

7. The process according to one of the preceding claims, in which the brazing material (6) and/or the metallic structure (23) additionally execute an immersing motion in axial direction (5).

8. The process according to one of the preceding claims, in which on regions of the metallic structure (23), on which brazing material should adhere to the metallic structure (23), is applied with a bonding agent (11) before applying brazing material.

9. The process according to one of the preceding claims, in which applying brazing material only is executed to a predeterminable height (12) starting from an end face (4) of the metallic structure (23).

10. The process according to one of the preceding claims, in which the metallic structure (23) is moved relatively to the brazing material (6) after being brought into contact, und the operation of applying brazing material to another end face (4) of the metallic structure is repeated.

11. The process according to one of the preceding claims, in which also after the metallic structure (23) being brought into contact the metallic structure (23) still is vibrated for a predeterminable time.

12. The process according to one of the preceding claims, in which finally a at least partial cleaning of the metallic structure (23) is executed, wherein excess brazing material (6) is removed from the metallic structure (23), in particular by means of a fluid flowing through the metallic structure (23).

13. The process according to one of the preceding claims, wherein the metallic structure (23) is constructed as a honeycomb body (1), in particular with at least partially structured metal foils (13, 14), wherein the channels (3) form pockets (15), and the brazing material (6) is agglomerated substantially in the pockets (15) by the vibration.

14. An apparatus for brazing material application onto a metallic structure (23) like a honeycomb body with a powdery brazing material (6), comprising a container (8) for containing the powdery brazing material (6) and a manipulator arm (21) for fixing the metallic structure (23), **characterized in that** means (22, 24) are provided for executing a vibration of the metallic structure (23) and/or of the powdery brazing material (6), wherein vibrations can be carried out with a frequency in a region of between 20 Hz and 100 Hz, in particular between 25 Hz and 50 Hz, and wherein the vibrations can be carried out with an amplitude in a region of between 0,1 mm and 3 mm.

15. The apparatus according to claim 14, **characterized in that** a vibrator (24) is connected to the container (8).

16. The apparatus according to claim 14 or 15, **characterized in that** a vibrator (24) is connected to the metallic structure (23), in particular the vibrator (24) is part of the manipulator arm (21).

17. The apparatus according to one of claims 14 to 16, **characterized in that** a pulse emitter (22) is provided, which generates a vibration of the powdery brazing material (6).

## Revendications

1. Procédé d'application d'agent à braser sur une structure métallique (23) à la façon d'un corps en nids d'abeilles (1), la structure métallique (23) étant mise en contact de manière telle avec un matériau à braser pulvérulent (6) que le matériau à braser (6) reste adhéré au moins partiellement, **caractérisé en ce que** la structure métallique (23) et/ou le matériau à braser (6) est mis/sont mis en vibration au moins durant la mise en contact et la vibration est effectuée avec une fréquence dans une gamme entre 20 Hz et 100 Hz, notamment entre 25 Hz et 50 Hz, et la vibration étant effectuée avec une amplitude dans une gamme entre 0,1 mm et 3 mm.

2. Procédé selon la revendication 1, dans le cas duquel la structure métallique (23) est retenue au moins durant le contact par un grappin (20) et /ou par un bras manipulateur (21), dans quel cas la vibration est transmise à l'intermédiaire du grappin (20), respectivement du bras manipulateur (21).

3. Procédé selon la revendication 1, dans lequel le matériau à braser se trouve dans un réservoir (8), la vibration étant transmise à l'intermédiaire du réservoir (8).

4. Procédé selon l'une des revendications précédentes, dans lequel la structure métallique (23) est un corps en nids d'abeilles (1) avec des parois de canaux (2) et des canaux (3) et dans lequel les canaux (3) confinent à une face frontale (4) du corps en nids d'abeilles (1) et s'étendent parallèlement à un axe (5), et dans lequel en outre le corps en nids d'abeilles (1) et le matériau à braser (6) sont vibrés de manière rotative l'un à l'autre, dans quel cas de préférence toute la face frontale (4) du corps en nids d'abeilles (1) effectue un mouvement relatif par rapport au matériau à braser (6).

5. Procédé selon l'une des revendications précédentes, dans lequel la vibration est effectuée avec une amplitude (9) constante.

6. Procédé selon l'une des revendications précédentes, dans lequel durant la vibration une modification de la fréquence de la vibration est effectuée.

7. Procédé selon l'une des revendications précédentes, dans lequel le matériau à braser (6) et/ou la structure métallique (23) effectue un mouvement de plongée en direction axiale (5).

8. Procédé selon l'une des revendications précédentes, dans lequel au moins les régions de la structure métallique (23) sur lesquelles du matériau à braser doit rester adhéré, sont pourvues d'un adhésif (11) avant l'application d'agent à braser (11).

9. Procédé selon l'une des revendications précédentes, dans lequel l'application d'agent à braser n'est effectuée que jusqu'à une hauteur prédéterminée (12), en partant d'une face frontale (4) de la structure métallique (23).

10. Procédé selon l'une des revendications précédentes, dans lequel la structure métallique (23) avant la mise en contact est déplacée en relation au matériau à braser (6) et en ce que le processus de brasage est répété par une autre face frontale (4) de la structure métallique (23).

11. Procédé selon l'une des revendications précédentes, dans lequel, aussi après la mise en contact, la structure métallique (23) vibre encore durant un intervalle de temps pouvant être prédéterminé.

12. Procédé selon l'une des revendications précédentes, dans lequel pour terminer, un nettoyage au moins partiel de la structure métallique (23) est effectué, du matériau à braser inutile (6) étant évacué de la structure métallique (23), notamment au moyen d'un fluide traversant la structure métallique (23).

13. Procédé selon l'une des revendications précédentes, la structure métallique (23) étant construite comme corps en nids d'abeilles (1), notamment avec des feuilles de tôle au moins partiellement structurées (13, 14), les canaux (3) formant des goussets (15) et dû à la vibration le matériau à braser étant déposé sensiblement dans les goussets (15).

14. Dispositif d'application d'agent à braser sur une structure métallique (23) à la façon d'un corps en nids d'abeilles avec un matériau à braser pulvérulent (6), comprenant un réservoir (8) pour recevoir le matériau à braser (6) pulvérulent et un bras manipulateur (21) pour affixer la structure métallique (23), **caractérisé en ce que** des moyens (22, 24) sont prévus pour générer une vibration de la structure métallique (23) et/ou du matériau à braser pulvérulent (6), dans quel cas des vibrations peuvent être générées avec une fréquence dans une gamme entre 20 Hz et 100 Hz, notamment entre 25 Hz et 50 Hz, et des vibrations étant effectuée avec une amplitude dans une gamme entre 0,1 mm et 3 mm.

15. Dispositif selon la revendication 14 à 15, **caractérisé en ce qu'**un vibrateur (24) est connecté au réservoir (8).

16. Dispositif selon la revendication 14 ou 15, **caractérisé en ce qu'**un vibrateur (24) est connecté à la structure métallique (23), le vibrateur (24) étant notamment une partie du bras manipulateur (21).

17. Dispositif selon l'une des revendications 14 à 16, **caractérisé en ce qu'**un émetteur d'impulsions (22) est prévu, qui effectue une vibration du matériau à braser pulvérulent (6).
